# EUROPEAN PATENT APPLICATION

(11) **EP 4 668 311 A1**
(43) Date of publication of application: **24.12.2025**
(21) Application number: 25182722.6
(22) Date of filing: 13.06.2025
(51) Int. Cl.: H01H 85/30, G02B 6/00, H01H 9/16, H01H 37/76

(54) **OPTICAL SWITCHES AND SYSTEMS INCLUDING THE SAME**

(30) Priority: 17.06.2024 US 202418745359
(71) Applicant: AMI INTERNATIONAL SAPI de C.V., 64650 Monterrey, Nuevo León (MX)
(72) Inventor: SAINZ BARAJAS, Juan Bernardo, 64650 MONTERREY (MX)
(74) Representative: Groth & Co. KB

(57) **Abstract**

An optical switch and system including the same are provided. The optical switch includes (i) a fastening portion configured to releasably attach directly or indirectly to a fuse casing, (ii) a cable connecting portion including a first fiber optic cable connection port, a second fiber optic cable connection port, and an optical through-channel extending from the first fiber optic cable connection port and the second fiber optic connection port; and (iii) an actuator configured to move between a first position associated with a non-blown fuse and a second position associated with a blown fuse. The actuator includes an optical blocking portion that is moved into or within the optical through-channel of the cable connecting portion when the actuator is in the second position.

## Description

### TECHNICAL FIELD

Embodiments of the presently-disclosed invention relate generally to optical switches and systems including the same, in which the optical switch may be in a non-triggered state associated with an non-blown fuse or a triggered state associated with a blown fuse to which the switch is operatively coupled. The systems may include an optical switch, an optical transceiver module including a transmitter and a receiver, and fiber optic cables to provide a continuous optical loop while the optical switch is in the non-triggered state and continuous loop is disrupted or broken when the optical switch is in the triggered state.

### BACKGROUND

Traditionally, electrical standard blown fuse detection micro switches utilize a separate electrical loop for the detection of a blown fuse. For instance, traditional electrical micro switches include an actuator that when engaged moves electrical contacts from one position to another position. For instance, the actuator of electrical micro switches may be operatively coupled or otherwise aligned with a blown fuse indicator component (e.g., plunger, arm, lever, etc.) from a fuse being monitored. In a non-triggered state for the electrical micro switch associated with a non-blown fuse, the optical switch ensures a first electrical loop. In a triggered state for the electrical micro switch associated with a blown fuse, the actuator moves in a manner to disconnect the first electrical loop and optionally complete a second, different electrical loop. This change in continuity of, at least, the first electrical loop indicates that the fuse being monitored or associated with this particular electrical micro switch has blown.

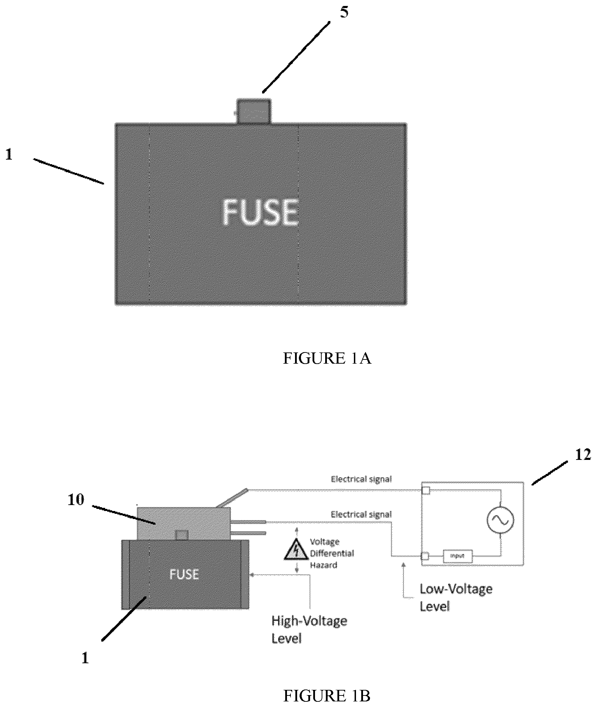

Figure 1A illustrates a schematic of a fuse 1 with a blown fuse indicator component 5 extending from the fuse indicating that the fuse has blown. Figure 1B illustrates an electrical micro switch 10 coupled to a fuse 1 in a non-blown state. The electrical micro switch 10 is connected to control system 12 such that a continuous electrical signal (e.g., first continuous electrical path) is maintained as long as the micro switch remains in the non-triggered state (i.e., non-blown fuse). Upon the fuse 1 blowing, however, an actuator may be impacted (e.g., directly or indirectly contacted) by the blown fuse indicator component 5 and the continuous electrical signal (e.g., first continuous electrical path) is disrupted to signal that the fuse has blown.

As illustrated in Figure 1B, these electrical micro switches rely on a physical actuator that moves a lever to trigger electrical contacts when engaged (e.g., depressed). These electrical micro switches operate at low voltage levels and undesirably may be associated with one or more of the following: high-voltage hazards (e.g., when installed in medium voltage equipment, contact with medium voltage can damage the low-voltage micro switch and pose safety risks); electrical noise interference (e.g., can lead to false positives or negatives in blown fuse detection); and voltage drops (e.g., standard micro switches are sensitive to voltage drops, especially with longer cable lengths, affecting their reliability).

Accordingly, there remains a need in the art for a switch that provides a safe and reliable means for the detection of blown fuses.

### SUMMARY OF INVENTION

One or more embodiments of the invention may address one or more of the aforementioned problems. Certain embodiments according to the invention provide an optical switch (e.g., an optical micro switch) comprising the following: (i) a fastening portion configured to releasably attach directly or indirectly to a fuse casing; (ii) a cable connecting portion including (a) a first fiber optic cable connection port, (b) a second fiber optic cable connection port, and (c) an optical through-channel extending from the first fiber optic cable connection port and the second fiber optic connection port; and (iii) an actuator having (a) a blown fuse indicator-receiving portion proximate to the fastening portion and located to be directly or indirectly impacted by a blown fuse indicator component from a fuse, and (b) a top portion proximate to the cable connecting portion and comprising an optical blocking portion. The actuator may have a first position associated with a non-blown fuse (e.g., non-triggered state for the optical switch) and a second position associated with a blown fuse (e.g., a triggered state for the optical switch) where the optical blocking portion is located within the optical through-channel of the cable connecting portion.

In another aspect, the present invention provides a system (e.g., an optical system) comprising: (i) an optical switch, such as those described and disclosed herein; (ii) an optical transceiver module including a transmitter and a receiver; (iii) a first fiber optic cable comprising a first proximate end connected to the first fiber optic cable connection port and a first distal end operatively coupled to the transmitter; and (iv) a second fiber optic cable comprising a second proximate end connected to the second fiber optic cable connection port and a second distal end operatively coupled to the receiver. In this regard, the system may define a continuous optical loop when the actuator is in the first position associated with a non-blown fuse (e.g., non-triggered state for the optical switch) while the continuous optical loop may be disrupted or broken when the actuator is in the second position associated with a blown fuse (e.g., a triggered state for the optical switch).

### BRIEF DESCRIPTION OF THE DRAWING(S)

The invention now will be described more fully hereinafter with reference to the accompanying drawings, in which some, but not all embodiments of the invention are shown. Indeed, this invention may be embodied in many different forms and should not be construed as limited to the embodiments set forth herein; rather, these embodiments are provided so that this disclosure will satisfy applicable legal requirements. Like numbers refer to like elements throughout, and wherein:
Figure 1A illustrates a fuse with a blown fuse indicator component in an activated state indicating that the fuse has blown;
Figure 1B illustrates a schematic of an electrical micro switch within a blown fuse detection system according to the prior art;
Figures 2A and 2B illustrate an optical switch in accordance with certain embodiments of the invention;
Figure 2C is a top view of the optical switch of Figure 2A;
Figure 2D is a side view schematic of the optical switch of Figure 2A;
Figure 2E is a cross-sectional view of Figure 2D along line E-E;
Figure 2F is an end view schematic of the optical switch of Figure 2A;
Figure 2G is a cross-sectional view of Figure 2F;
Figure 3 illustrates a system including an optical switch in accordance with certain embodiments of the invention;
Figure 4A illustrates an isometric view of a fastening portion in accordance with certain embodiments of the invention;
Figure 4B illustrates a top view schematic of the fastening portion of Figure 4A;
Figure 4C illustrates an end view schematic of the fastening portion of Figure 4A;
Figure 4D illustrates a cross-sectional view of Figure 4C across line D-D;
Figure 4E illustrates a side view schematic of the fastening portion of Figure 4A; and
Figures 5A-5B show opposite isometric views of a cable connecting portion in accordance with certain embodiments of the invention;
Figure 5C is a top view schematic of the cable connecting portion of Figures 5A-5B;
Figure 5D is a cross-sectional view of Figure 5C along line D-D;
Figure 5E is an end view schematic of the cable connecting portion of Figures 5A-5B;
Figure 5F is a cross-sectional view of Figure 5E along line F-F;
Figure 5G is a side view schematic of Figure 5A;
Figure 6A is an isometric view of an actuator according to certain embodiments of the invention;
Figure 6B is a top view schematic of the actuator of Figure 6A;
Figure 6C is a an end view schematic of the actuator of Figure 6A;
Figure 6D is a cross-sectional view of Figure 6C along line D-D;
Figure 6E is a side view schematic of the actuator of Figure 6A; and
Figure 7 illustrates a schematic of multiple individual fuses associated with respective optical switches interfaced with a multiplexer that serves as a data selector in accordance with certain embodiments of the invention.

### DETAILED DESCRIPTION

The invention now will be described more fully hereinafter with reference to the accompanying drawings, in which some, but not all embodiments of the invention are shown. Indeed, this invention may be embodied in many different forms and should not be construed as limited to the embodiments set forth herein; rather, these embodiments are provided so that this disclosure will satisfy applicable legal requirements. As used in the specification, and in the appended claims, the singular forms "a", "an", "the", include plural referents unless the context clearly dictates otherwise.

Several of the figures illustrate an optical switch according to certain embodiments of the invention, in which the figures provide relative measurements of the different components. It should be noted that these numerical values are merely illustrative in nature, and are in no way limiting.

The presently-disclosed invention relates generally to optical switches and systems including the same, in which the optical switch may be in a non-triggered state associated with a non-blown fuse or a triggered state associated with a blown fuse to which the switch is operatively coupled. The systems may include an optical switch, an optical transceiver module including a transmitter and a receiver, and fiber optic cables to provide a continuous optical loop while the optical switch is in the non-triggered state and continuous loop is disrupted or broken when the optical switch is in the triggered state. In this regard, the optical switches and systems including them provide a safe, reliable, and durable means for blown fuse detection, for example, compared to electrical micro switches, which present limitations when used in medium voltage applications due to safety concerns, susceptibility to noise, and voltage drop issues. Stated somewhat differently, certain embodiments of the invention provide a safe, reliable, and durable system for blown fuse detection by replacing traditional electrical micro switches and wiring with fiber optic cables and optical switches. Additionally, an optical transceiver module may manage the optical loop.

In accordance with certain embodiments of the invention, the optical switches and systems including the same provide a means to avoid electrical hazards for medium voltage installations by using an optical signal among medium voltage cables. This approach isolates a low-voltage circuit from any other higher-voltage signal circuit. Moreover, certain embodiments of the invention provide an enhanced safety by using an optical signal instead of electrical signals, which provides a system that avoids electrical hazards in medium voltage installations and isolates the low-voltage circuit from high-voltage circuits. Since optical fiber is nonconductive, it will not cause damage to equipment in the event that the optical switch is exposed to a short circuit or system voltage. Certain embodiments of the invention may provide improved reliability as optical fiber is immune to electrical noise, therefore, eliminating false positives or negatives and ensuring accurate blown fuse detection. Still yet, certain embodiments in accordance with the invention provide a reduced signal drop impact. That is, fiber optic cables experience minimal signal drops, regardless of cable length, maintaining reliable operation.

In accordance with certain embodiments of the invention, the optical switches and systems including the same beneficially provide a failsafe system. For example, if the fiber optic communication is lost, the signal goes missing. For instance, the system does not require the connection of a new communication loop (e.g., electrical or fiber optic) to be detected for the realization that a blown fuse associated with the optical switch has occurred. In this regard, the mere loss of fiber optic communication associated with the optical switch / system may be indicative of a blown fuse.

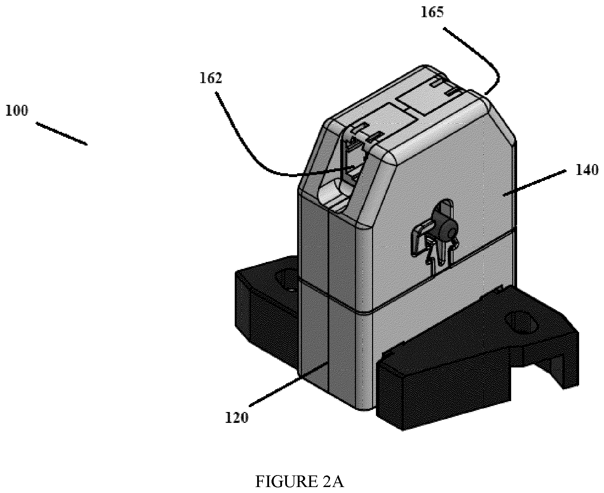

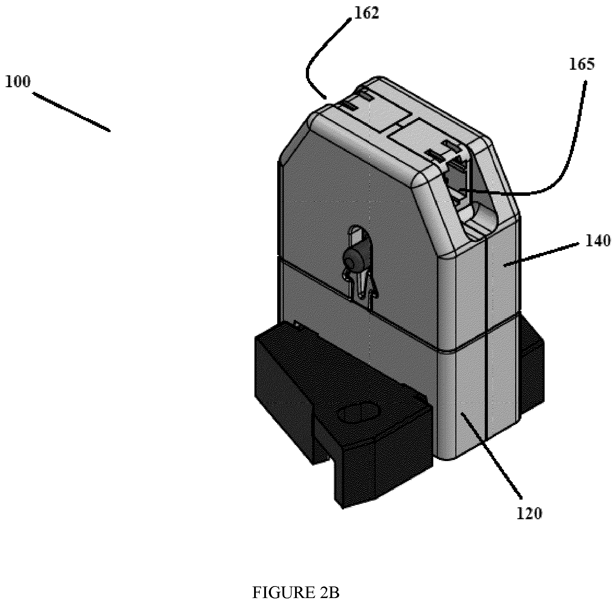

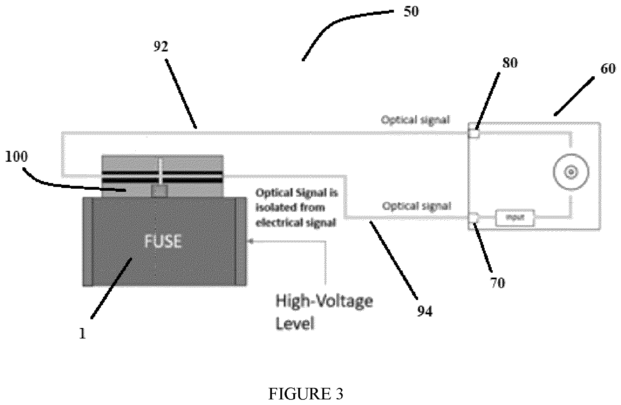

Contrary to electrical micro switches, Figures 2A and 2B illustrate an optical switch 110 in accordance with certain embodiments of the invention while Figure 3 illustrates a system 50 including an optical switch 110 in accordance with certain embodiments of the invention. As can be readily appreciated, the optical switch and system including the same avoid the previously discussed shortcomings of electrical optical switches as an optical signal of the system is isolated from an electrical signal / current passing through the fuse. Figures 2A, 2B, and 3 are discussed in greater detail below.

Certain embodiments according to the invention provide an optical switch (e.g., an optical micro switch) comprising the following: (i) a fastening portion configured to releasably attach directly or indirectly to a fuse casing; (ii) a cable connecting portion including (a) a first fiber optic cable connection port, (b) a second fiber optic cable connection port, and (c) an optical through-channel extending from the first fiber optic cable connection port and the second fiber optic connection port; and (iii) an actuator having (a) a blown fuse indicator-receiving portion proximate to the fastening portion and located to be directly or indirectly impacted by a blown fuse indicator component from a fuse, and (b) a top portion proximate to the cable connecting portion and comprising an optical blocking portion. The actuator may have a first position associated with a non-blown fuse (e.g., non-triggered state for the optical switch) and a second position associated with a blown fuse (e.g., a triggered state for the optical switch) where the optical blocking portion is located within the optical through-channel of the cable connecting portion.

In accordance with certain embodiments of the invention, the fastening portion, the cable connecting portion, and the actuator may each be individual components that are releasably interconnected to each other to define the optical switch. In this regard, each of the individual components by be independently interlocked together via a variety of fastening means, such as snap-fits, clips, screws, nuts and bolts, or any combination thereof. Alternatively, the fastening portion and the cable connecting portion may be provided as two separate halves fastened together with the actuator housed therein. Embodiments of the invention having the fastening portion, the cable connecting portion, and the actuator each as individual components that are releasably interconnected to each other may provide advantages with ease of maintenance and/or inspection.

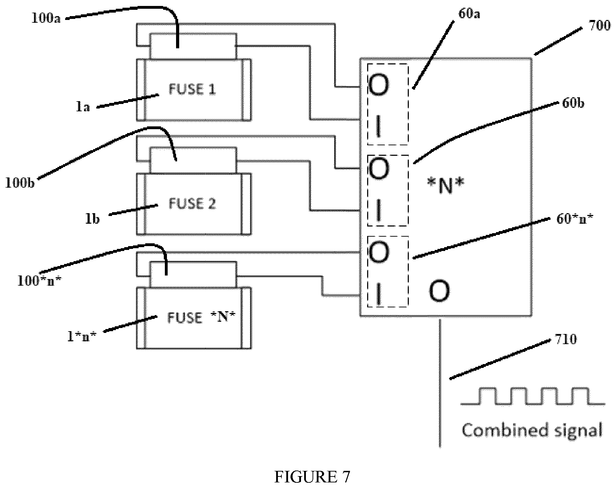

The fastening portion, in accordance with certain embodiments of the invention, may be attach directly or indirectly to a fuse casing via at least one connection means. For example, a fuse may be housed within a fuse casing or shell. The fastening portion may directly or indirectly engage (e.g., releasably couple) to the fuse casing via at least one connector means. By way of example only, the at least one connection means may include a pair of male hooks configured to directly or indirectly releasably engage the fuse housing, one or more straps configured to directly or indirectly releasably engage the fuse housing, one or more inserts configured to directly or indirectly releasably engage the fuse housing, one or more fasteners configured to directly or indirectly releasably engage the fuse housing, or any combination thereof. In accordance with certain embodiments of the invention, the systems may include multiple different fuses that are connected to a multiplexer (MUX), which serves as a data selector. The MUX receives control signals that determine which fuse's status is indicated by a single coded signal sent to the output as illustrated by Figure 7, which is discussed in more detail below.

In accordance with certain example embodiments, the fastening portion includes at least one male engagement clip portion configured to releasably couple with a corresponding at least one female engagement clip portion to interlock and/or release the fastening portion to the cable connecting portion. For sake of clarity, the at least one male engagement clip portion is separate and distinct from the at least one connection means that directly or indirectly engages (e.g., releasably coupled) the fuse housing. The at least one male engagement clip portion may comprise, for example, from 1 to about 6 separate and individual male engagement clip portions, such as at least about any of the following: 1, 2, 3, and 4, and/or at most about any of the following: 6, 5, and 4. In this regard, the cable connecting portion may include a corresponding number of individual female engagement clip portions, such as at least about any of the following: 1, 2, 3, and 4, and/or at most about any of the following: 6, 5, and 4. Alternatively, the fastening portion may include the at least one female engagement clip portion(s) and the cable connecting portion may include a corresponding number of individual male engagement clip portions configured to releasably couple with each other. Regardless of which portion of the optical switch has the male engagement clip portion(s) or the female engagement clip portion(s), they corresponding clip portions may provide a relasable snap fit between the fastening portion and the cable channel connecting portion. In accordance with certain embodiments of the invention, the fastening portion may include one or more individual male engagement clip portions and one or more individual female engagement clip portions while the cable connecting portion may include a corresponding one or more individual male engagement clip portions and one or more individual female engagement clip portions.

The fastening portion, in accordance with certain embodiments of the invention, may include a hollow cavity extending through a thickness (e.g., the entire thickness in a z-direction that is perpendicular to a cross-section of the fastening portion in an x-y plane). The hollow cavity, for instance, may be sized to accommodate insertion of the actuator therethrough and provide access to the blown fuse indicator-receiving portion of the actuator when mounted directly or indirectly onto a fuse.

In accordance with certain example embodiments, the fastening portion includes at least one pair of lower guide channels configured to receive corresponding guide posts of the actuator, wherein the guide posts of the actuator rest in lowermost portion of the at least one pair of lower guide channels when the actuator is in the first position associated with a non-blown fuse (e.g., non-triggered state for the optical switch). The at least one pair of lower guide channels, may comprise from about 1 to about 4 pairs of lower guide channels, such as 1, 2, 3, or 4 pairs of lower guide channels and the actuator may include any corresponding number of guide posts. In accordance with certain embodiments of the invention, a pair of lower guide channels may include a respective first lower guide channel and a respective second lower guide channel being located opposite to each other across the hollow cavity of the fastening portion. In this regard, the actuator may be supported and guided from two or more sides of the actuator so as to provide improved stability and ease of translation of the actuator in the event of a blown fuse. When the actuator is in the first position (e.g., non-triggered state of the optical switch) the guide posts of the actuator may be resting in a lowermost portion of the respective lower guide channel(s).

The fastening portion, in accordance with certain embodiments of the invention, may include at least one alignment protrusion configured to insert within at least one corresponding alignment recession of the cable connecting portion. The at least one alignment protrusion and corresponding at least one alignment recession provide a quick means to facilitate proper alignment of the fastening portion and the cable connection portion when assembling the optical switch. Alternatively, the at least one alignment protrusion may be part of the cable connecting portion and the corresponding at least one alignment recession may be part of the fastening portion. Regardless of the location of the at least one alignment protrusion and the location of the at least one alignment recession, the number of corresponding alignment protrusions and alignment recessions may be from 1 to about 6 pairs, such as 1, 2, 3, 4, 5, or 6 pairs. In addition to facilitating proper alignment, these corresponding alignment protrusions and alignment recessions may provide lateral stability and/or strength (e.g., perpendicular to the z-direction) to the optical switch.

In accordance with certain example embodiments, the cable connecting portion includes a hollow pocket aligned with the hollow cavity of the fastening portion, and the hollow pocket may be configured to receive and at least partially encase the top portion of the actuator. The cable connecting portion may also include at least one pair of upper guide channels aligned with the at least one pair of lower guide channels, and configured to receive the corresponding guide posts of the actuator when the actuator is located in the second position associated with a blown fuse (e.g., triggered state for the optical switch). Similar to the lower guide channels, the at least one pair of lower guide channels may comprise from about 1 to about 4 pairs of upper guide channels, such as 1, 2, 3, or 4 pairs of upper guide channels and the actuator may include any corresponding number of guide posts. In accordance with certain embodiments of the invention, a pair of upper guide channels may include a respective first upper guide channel and a respective second upper guide channel being located opposite to each other across the hollow pocket of the cable connecting portion. When the fastening portion and the cable connecting portion are interlocked and aligned, the respective lower guide channels and the respective upper guide channels are aligned to form respective complete guide channels through with the respective guide posts of the actuator may translate / slide through upon moving from the first position of the actuator (e.g., non-triggered state for the optical switch) to the second position of the actuator (e.g., triggered state for the optical switch). In this regard, the actuator may be supported and guided from two or more sides of the actuator so as to provide improved stability and ease of translation of the actuator in the event of a blown fuse.

In accordance with certain example embodiments, the cable connecting portion includes at least one female engagement clip portion configured to releasably receive a corresponding at least one male engagement clip portion of the fastening portion (or vice versa as discussed above), and wherein the at least one female engagement clip portion comprises a position-retention component having a first state associated with the first position associated with a non-blown fuse (e.g., non-triggered state for the optical switch) and a second state associated with a blown fuse (e.g., triggered state for the optical switch). The position-retention component may be configured to retain the actuator in the first position of the actuator associated with a non-blown fuse (e.g., non-triggered state for the optical switch) until the actuator is translated / moved to the second position of the actuator associated with a blown fuse (e.g., triggered state for the optical switch). For example, the position-retention component may engage a corresponding engagement-portion of the actuator to mitigate or prevent premature movement of the actuator from its first position (e.g., non-triggered state for the optical switch) to its second position (e.g., triggered state for the optical switch). In this regard, the position-retention component may mitigate or prevent false positives that may be associated with premature movement of the actuator from its first position to its second position.

The engagement-portion of the actuator, for example, may comprise a recess formed in the actuator or a protrusion extending outwardly from the actuator, and wherein the position-retention component is actively or passively biased towards a first state associated with the first position of the actuator (e.g., non-triggered state for the optical switch), and is movable to a second state associated with the second position of the actuator (e.g., triggered state for the optical switch). By way of example, an active or passive biasing force associated with the first state of the position-retention component is less than a force associated with a triggering force of a blown fuse indicator component from a fuse. Accordingly, the position-retention component should not hinder the translation or movement of the actuator from the first position to the second position upon being impacted by a blown fuse indicator component from a fuse. Active biasing may be accomplished, for example, by a spring while a passive biasing may be accomplished, for example, by the formation of the position-transition component from a thinner section of material (e.g., plastic material that may be bent under pressure).

By way of example only, the engagement-portion of the actuator comprises a protrusion extending outwardly from the actuator and through a portion of a side channel of the cable connecting portion, wherein the side channel is contiguous with the at least one female engagement clip portion of the cable connecting portion. For example, the side channel may extend along a side wall of the cable connecting portion and be configured to allow translation / movement of the protrusion extending outwardly from the actuator from the first position of the actuator associated with a non-blown fuse (e.g., non-triggered state of the optical switch) to the second position of the actuator associated with a blown fuse (e.g., triggered state of the optical switch).

The actuator may comprise a variety of configurations, but generally includes a blown fuse indicator-receiving portion proximate to the fastening portion and located to be directly or indirectly impacted by a blown fuse indicator component from a fuse. The particular structure of the blown fuse indicator-receiving portion may vary as desired including, for example, a generally flat or planar surface generally parallel to a striking face of a blown fuse indicator component of a fuse. The actuator may also include a top portion proximate to the cable connecting portion and comprising an optical blocking portion. The optical blocking portion may comprise, for example, a thin piece of material that moves into the optical through-channel of the cable connecting portion and blocks and/or absorbs an optical signal being transferred through the optical through-channel of the cable connecting portion upon the actuator moving from its first position (e.g., non-triggered state of the optical switch) to its second position (e.g., triggered state of the optical switch). In this regard, the presence of the optical blocking portion located inside the optical through-channel of the cable connecting portion disrupts and/or breaks any continuous optical signal passing through the optical switch.

As noted above, the actuator may include one or more guide posts and/or engagement-portions. Each of these components may be formed integral with an actuator body to which these components, the optical blocking portion, and/or the engagement-portion of the actuator are associated with according to certain embodiments of the invention. Alternatively, any one of the foregoing components may be separately provided and joined or fastened onto the actuator body.

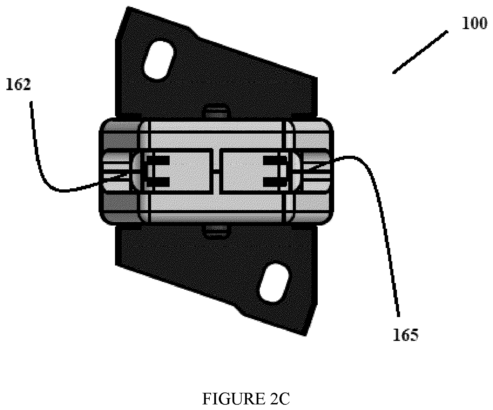

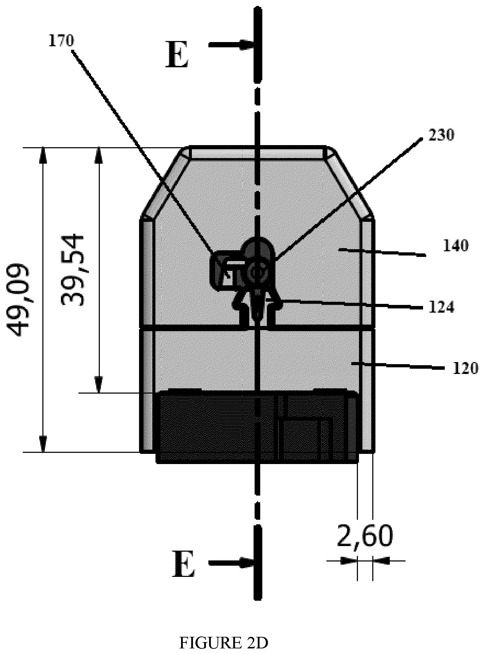

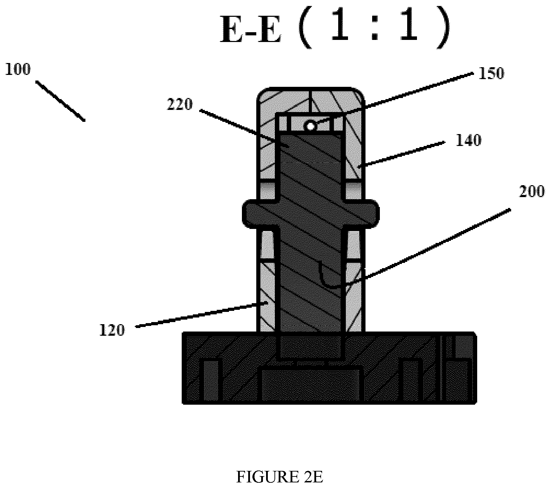

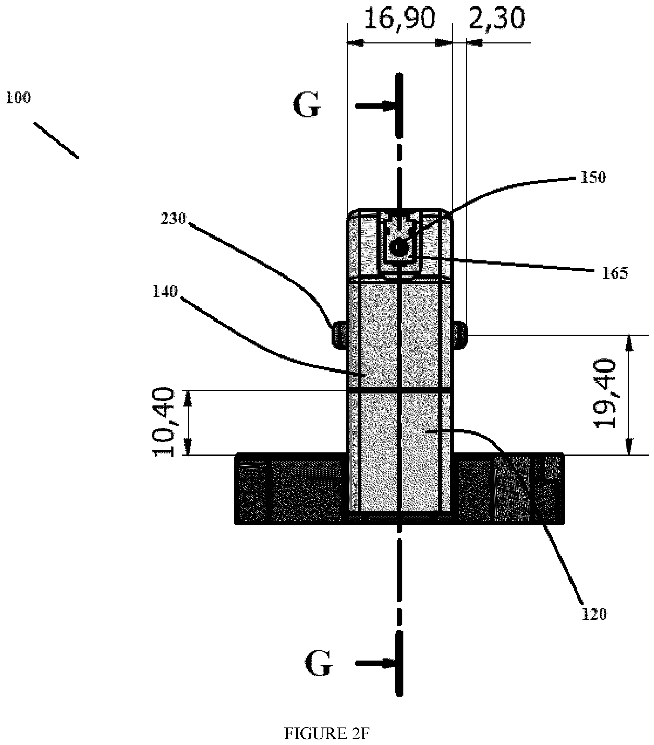

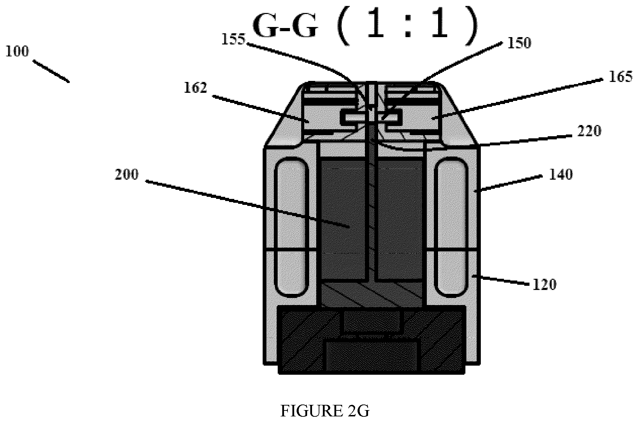

Figures 2A and 2B illustrate opposite isometric views of an optical switch 100 in accordance with certain embodiments of the invention. The optical switch 100 includes a fastening portion 120 (e.g., illustrated as releasably connected to a housing) and a cable connecting portion 140, which includes a first fiber optic cable connection port 162 and a second fiber optic cable connection port 165. Figure 2C is a top view of the optical switch 100 of Figure 2A and illustrates relative location of the first fiber optic cable connection port 162 and a second fiber optic cable connection port 165. Figure 2D is a side view schematic of the optical switch 100 of Figure 2A, and illustrated the interlocked features of the fastening portion 120 and the cable connecting portion 140. The cable connecting portion includes a position-retention component 170 engaged with a corresponding engagement-portion 230 of the actuator 200. Figure 2E is a cross-sectional view of Figure 2D along line E-E, and shows the actuator 200 housed within the optical switch 100. Figure 2D also shows the location of the optical through-channel 150 as the optical blocking portion 220 of the actuator 200 is located in the first position (e.g., non-triggered state for the optical switch). Figure 2F is an end view schematic of the optical switch 100 of Figure 2A, and shows engagement-portions 230 of the actuator protruding from the side of the cable connecting portion 140. Figure 2F also shows the location of the optical through-channel 150 relative to the second fiber optic cable connection port 165. Figure 2G is a cross-sectional view of Figure 2F, and illustrates the location of the optical through-channel 150 relative to the optical blocking portion 220 of the actuator 200 when the actuator is in the first position. Figure 2G also illustrates a optical blocking channel 155 configured to receive the optical blocking portion 220 if the actuator is moved to the second position of the actuator (e.g., triggered state of the optical switch).

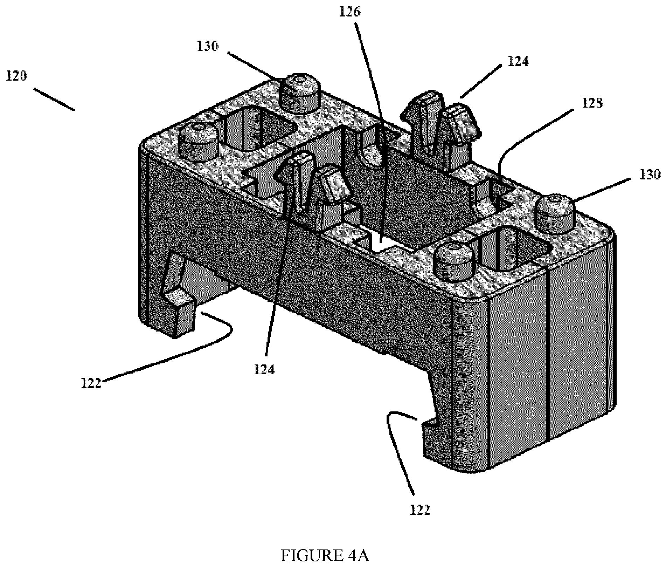

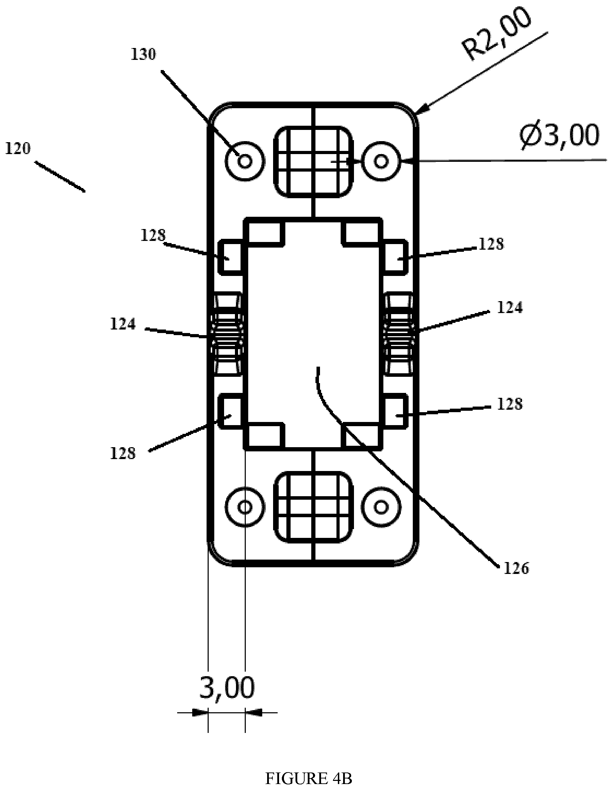

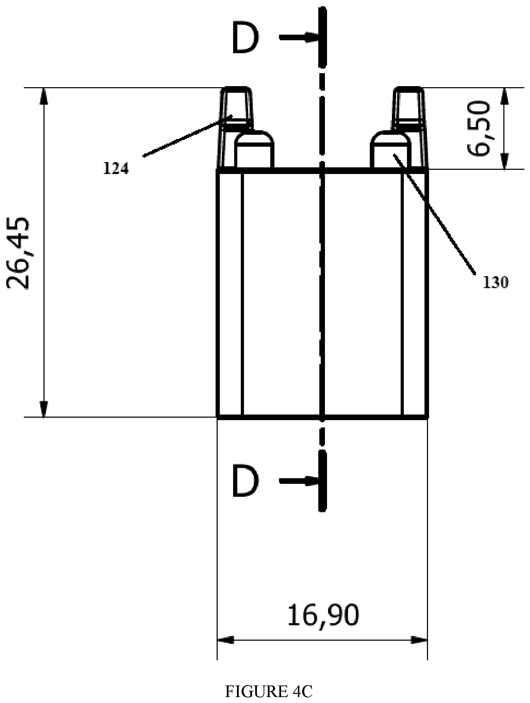

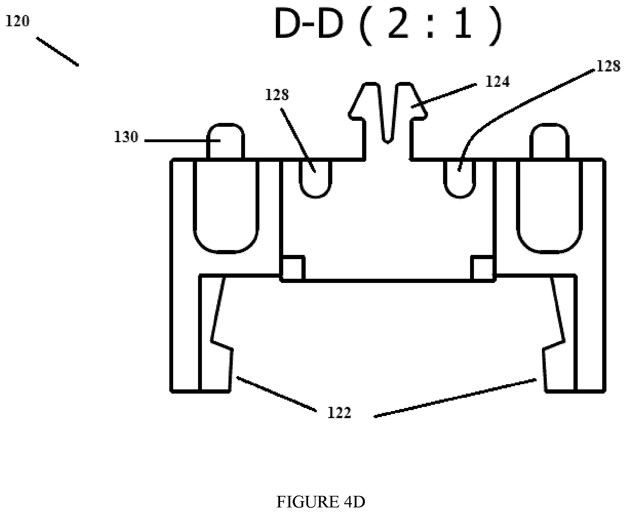

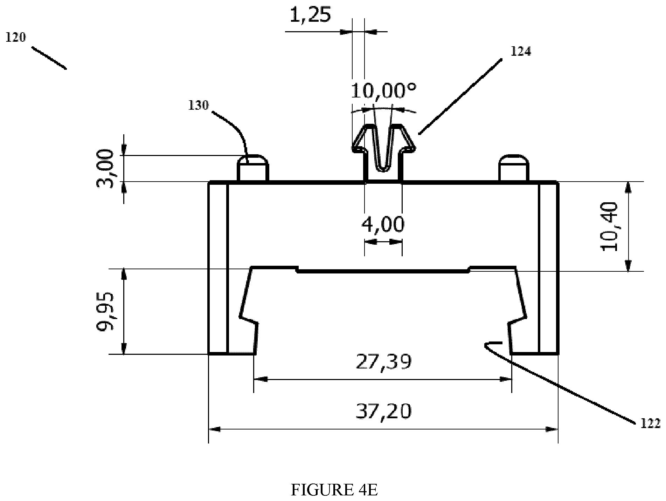

Figure 4A illustrates an isometric view of a fastening portion 120 in accordance with certain embodiments of the invention. As shown in Figure 4A, the fastening portion 120 at least one connection means includes a pair of male hooks 122 configured to directly or indirectly releasably engage the fuse housing. The fastening portion 120 also includes a hallow cavity includes at least one male engagement clip portion 124 configured to releasably couple with a corresponding at least one female engagement clip portion to interlock and/or release the fastening portion to the cable connecting portion, as shown in Figures 2A-2B. The fastening portion 120 also includes a hallow cavity 126 configured to receive the actuator 200 therein, while a plurality of lower guide channels 128 are provided as recesses in an inner surface of the fastening portion (e.g., open to towards the hallow cavity). As also shown in Figure 4A, the fastening portion 120 includes four alignment protrusions 130 configured to insert within at least one corresponding alignment recession of the cable connecting portion. Figure 4B illustrates a top view schematic of the fastening portion 120 of Figure 4A, and provides a better view of the hollow cavity 126 relative to the lower guide channels 128. The relative locations of the alignment protrusions 130 and the at least one male engagement clip portion 124 are also illustrated. Figure 4C illustrates an end view schematic of the fastening portion 120 of Figure 4A. Figure 4D illustrates a cross-sectional view of Figure 4C across line D-D, and provides a better visual illustration of the interior portion of the fastening portion 120. Figure 4E illustrates a side view schematic of the fastening portion 120 of Figure 4A and provides an exterior visualization of the fastening portion.

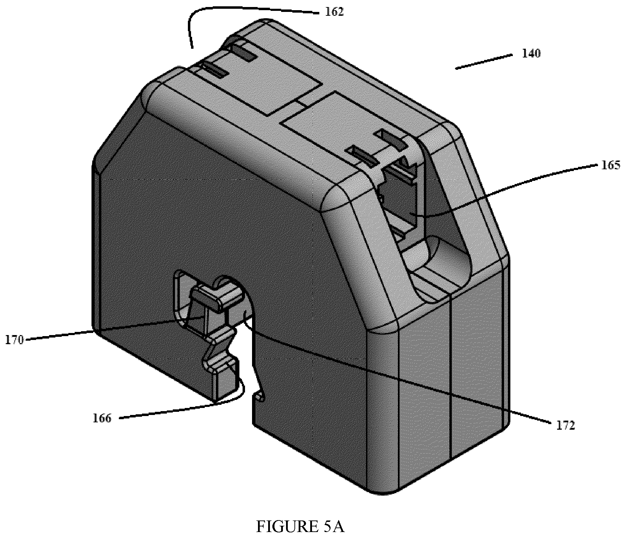

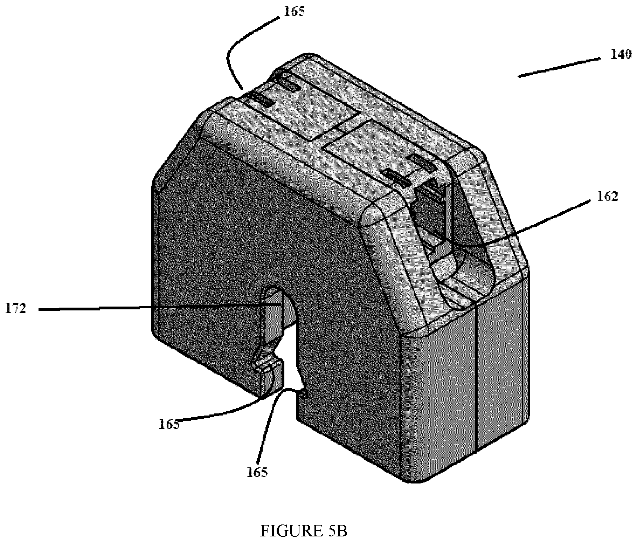

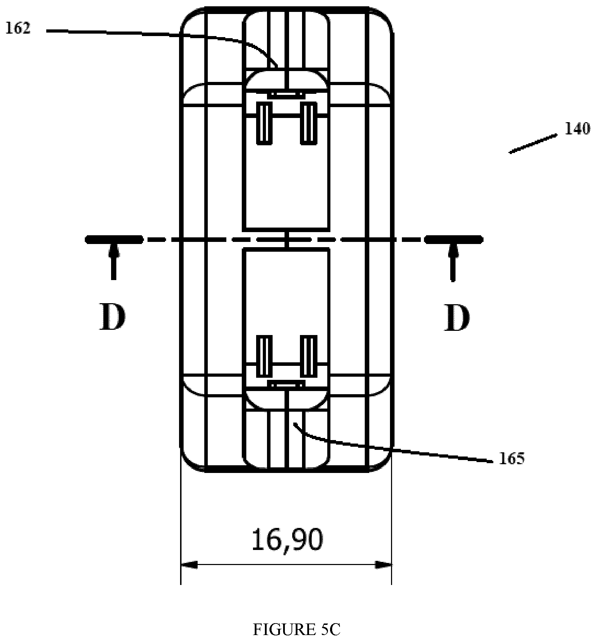

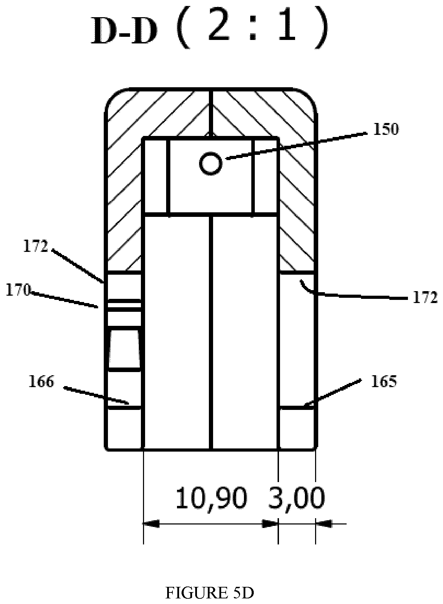

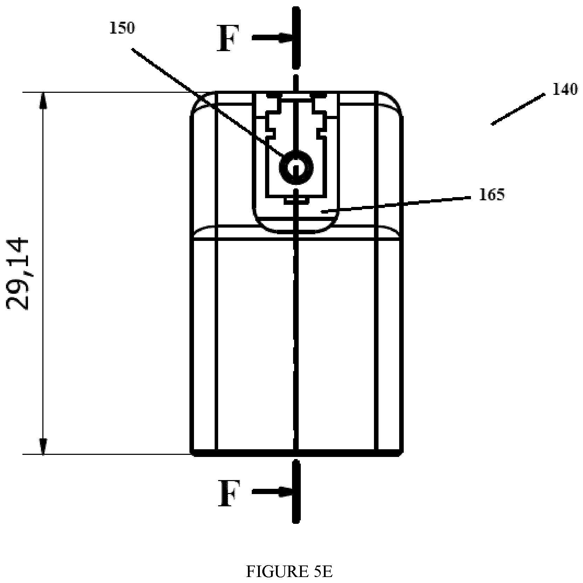

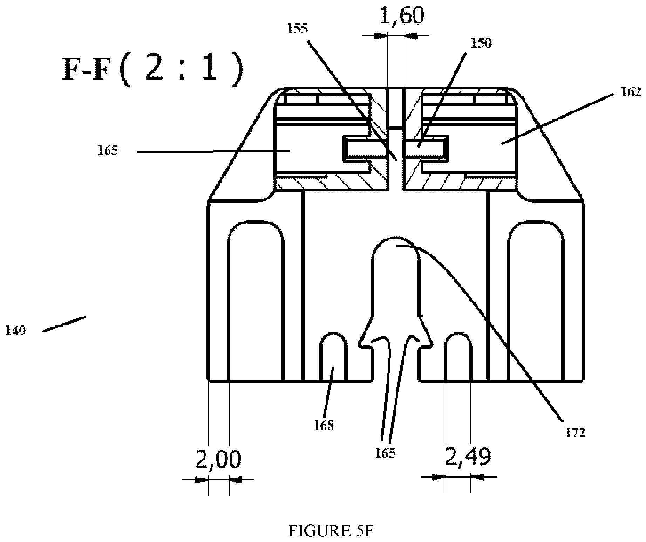

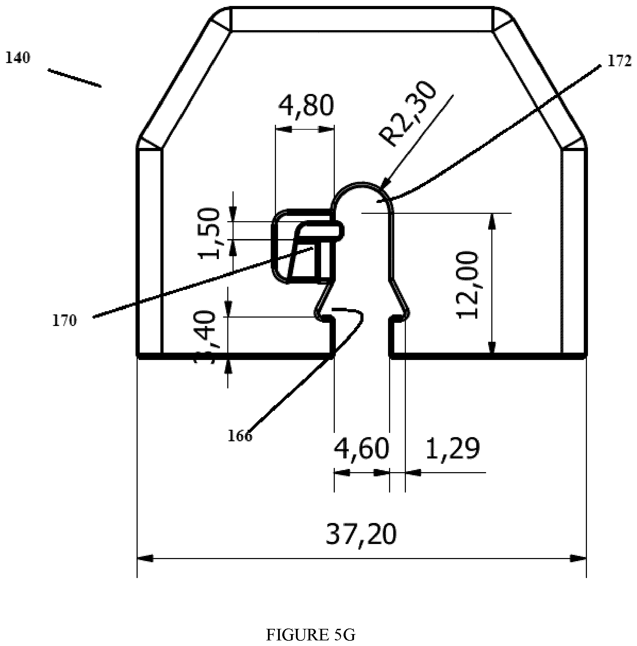

Figures 5A-5B show opposite isometric views of a cable connecting portion 140 in accordance with certain embodiments of the invention. Figure 5A shows the relative locations of first fiber optic cable connection port 162 and a second fiber optic cable connection port 165, as well as the at least one female engagement clip portion 166 configured to releasably receive a corresponding at least one male engagement clip portion 124 of the fastening portion 120. On this side of the cable connecting portion 140, the position-retention component 170 is located above female engagement clip portion 166 and proximate side channel 172. Figure 5B shows the opposite side of the cable connecting portion 140, which includes another female engagement clip portion 165 without a position-retention component. Figure 5C is a top view schematic of the cable connecting portion 140 of Figures 5A-5B. Figure 5D is a cross-sectional view of Figure 5C along line D-D, and illustrates the optical through-channel 150, the upper guide channels 165, side channels 172, female engagement clip portions 165, 166, and the position-retention component 170. Figure 5E is an end view schematic of the cable connecting portion 140 of Figures 5A-5B and illustrates the alignment of the optical through-channel 150 and the second fiber optic cable connection port 165. Figure 5F is a cross-sectional view of Figure 5E along line F-F, and shows the relative positioning of the upper guide channels 168, and female engagement clip portion 165. Figure 5F also illustrates the alignment of the optical through-channel 150 with both of the first fiber optic cable connection port 162 and the second fiber optic cable connection port 165. As also illustrated by Figure 5F, the cable connecting portion 140 may include an optical blocking channel 155 configured to receive the optical blocking portion 220 if the actuator is moved to the second position of the actuator (e.g., triggered state of the optical switch). Figure 5G is a side view schematic of Figure 5A, and illustrates a closer view of a position-retention component 170 according to this embodiment.

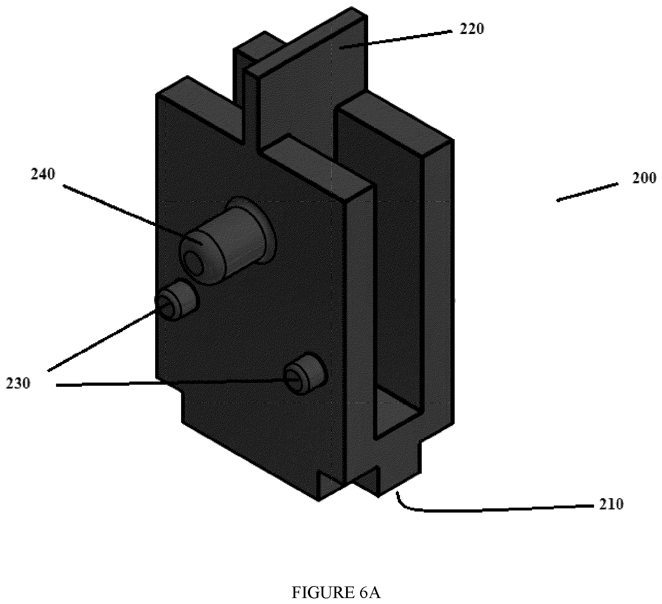

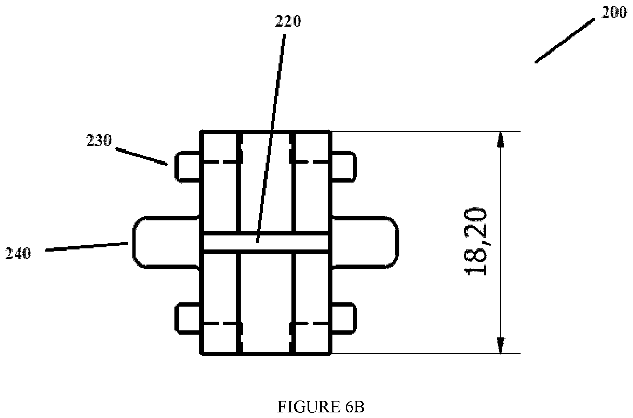

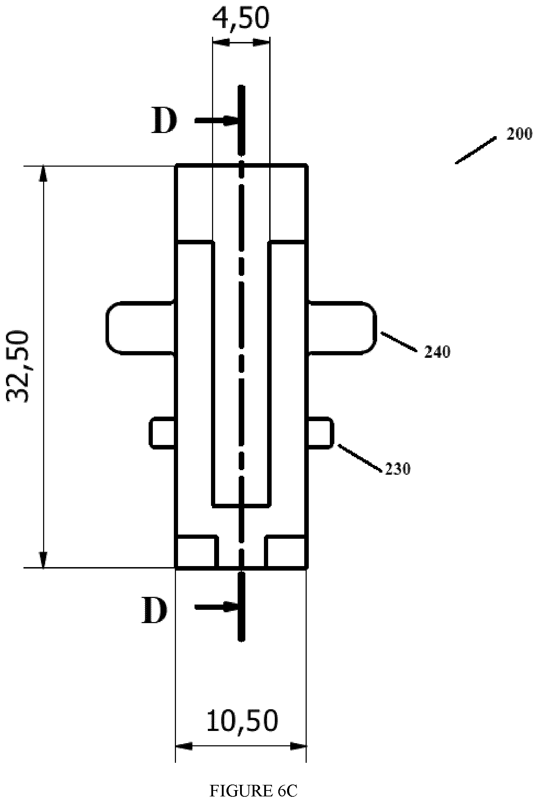

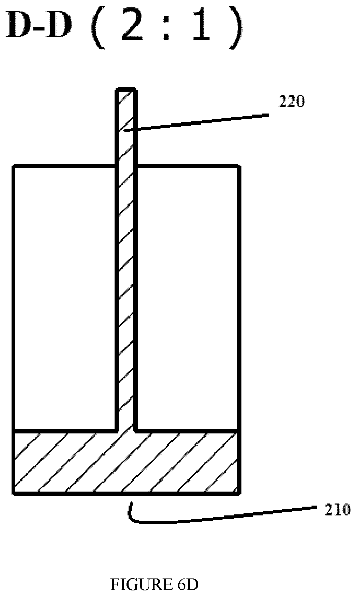

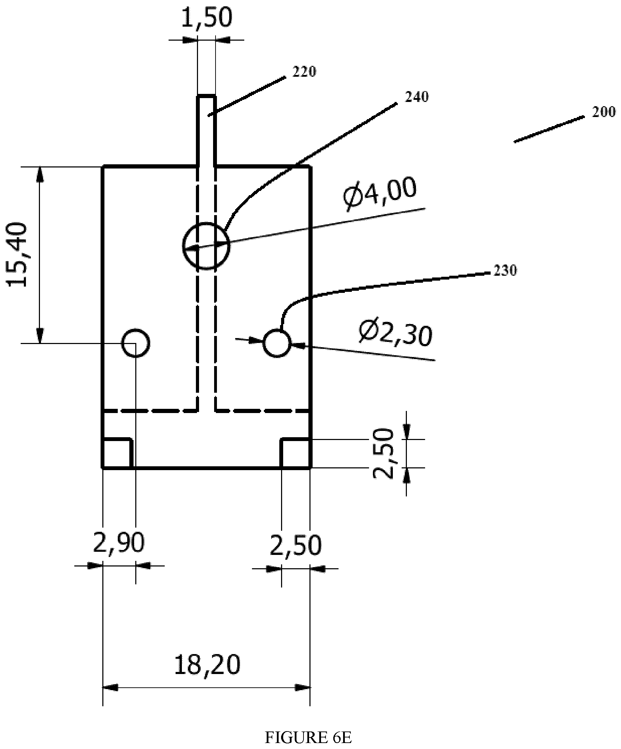

Figure 6A is an isometric view of an actuator 200 according to certain embodiments of the invention, in which the actuator includes blown fuse indicator-receiving portion 210 at a lower section and an optical blocking portion 220 at an upper section of the actuator. Figure 6A also shows guide posts 230, which may be received by the lower guide channels 128 of the fastening portion 120 while the actuator is in the first position (e.g., non-triggered state of the optical switch) and move into the upper guide channels 168 of the cable connecting portion 140 when the actuator is in the second position (e.g., -triggered state of the optical switch). Figure 6B is a top view schematic of the actuator of Figure 6A. Figure 6C is a an end view schematic of the actuator of Figure 6A. Figure 6D is a cross-sectional view of Figure 6C along line D-D. Figure 6E is a side view schematic of the actuator of Figure 6A.

In another aspect, the present invention provides a system (e.g., an optical system) comprising: (i) an optical switch, such as those described and disclosed herein; (ii) an optical transceiver module including a transmitter and a receiver; (iii) a first fiber optic cable comprising a first proximate end connected to the first fiber optic cable connection port and a first distal end operatively coupled to the transmitter; and (iv) a second fiber optic cable comprising a second proximate end connected to the second fiber optic cable connection port and a second distal end operatively coupled to the receiver. In this regard, the system may define a continuous optical loop when the actuator is in the first position associated with a non-blown fuse (e.g., non-triggered state for the optical switch) while the continuous optical loop may be disrupted or broken when the actuator is in the second position associated with a blown fuse (e.g., a triggered state for the optical switch). In accordance with certain embodiments of the invention, the system may comprise an external power source operatively connected to the optical transceiver module.

In accordance with certain embodiments of the invention, the system may comprise a fuse having a fuse casing enclosing or housing the fuse. The fuse casing may have an indicator opening (e.g., orifice) and a blown fuse indicator component having a first position associated with a non-blown fuse and a second position associated with a blown fuse. In this regard, the blown fuse indicator component may protrude through and outwardly from the indicator opening of the fuse casing when the fuse is blown and the blown fuse indicator is at the second position. The blown fuse indicator in its second position (e.g., a blown fuse) may directly or indirectly impact the blown fuse indicator-receiving portion of the actuator and trigger the optical switch as noted above. For instance, the fastening portion of the optical switch may be attached directly or indirectly to the fuse casing, and the blown fuse indicator-receiving portion may be located relative to the blown fuse indicator component such that the actuator is moved from the first position of the actuator (e.g., non-triggered state of the optical switch) to the second position of the actuator (e.g., triggered state of the optical switch) upon the blown fuse indicator component moving to the second position of the blown fuse indicator component and impacting the actuator for movement thereof to disrupt or break the continuous optical loop passing through the optical switch. For example, the optical blocking portion of the actuator may be moved into or located within the optical through-channel of the cable connecting portion, which disrupts the continuous optical loop or signal. The system, for example, may also include an alarm means (e.g., light, noise, a prompt on a computer interface screen, a prompt on a mobile phone, etc.) configured to indicate that the fuse has blown.

Figure 3, for instance, illustrates a system 50 including an optical switch 100 in accordance with certain embodiments of the invention. The system 50 illustrated in Figure 3 includes an optical switch 100, such as those described and disclosed herein, an optical transceiver module 60 including a transmitter 70 and a receiver 60, a first fiber optic cable 94 comprising a first proximate end connected to the first fiber optic cable connection port and a first distal end operatively coupled to the transmitter; and a second fiber optic cable 92 comprising a second proximate end connected to the second fiber optic cable connection port and a second distal end operatively coupled to the receiver. In this regard, the system 50 may define a continuous optical loop when the actuator of the optical switch 100 is in the first position associated with a non-blown fuse (e.g., non-triggered state for the optical switch) while the continuous optical loop may be disrupted or broken when the actuator is in the second position associated with a blown fuse (e.g., a triggered state for the optical switch).

Figure 7 illustrates a schematic of a system including multiple individual fuses associated with respective optical switches, such as those described and disclosed herein, interfaced with a multiplexer that serves as a data selector in accordance with certain embodiments of the invention. In particular, Figure 7 illustrates a system including a first optical switch 100a associated with a first fuse 1a, a second optical switch 100b associated with a second fuse 1b, and an 'n' optical switch associated with an 'n' fuse, wherein 'n' represents a total number of fuses and respective optical switches. The value of 'n' is not particularly limited. The total number of fuses and each of the respective optical switches may be interfaced via respective fiber optic cables, such as disclosed and described herein, with a multiplexer (MUX) 700. In this regard, each optical loop for each respective fuse/optical switch pair may be interfaced with a respective optical transceiver module 60a, 60b, 60*n*. In this regard, the MUX 700 may receive control signals that determine with fuse's status is indicated (e.g., blown fuse or non-blown fuse) by a single coded signal sent to the output 710.

Several of the figures (e.g., Figures 2D, 2F, 2G, 4B, 4C, 4E, 5C, 5D, 5E, 5F, 5G, 6B, 6C, and 6E) list example dimensions of the various structural features. It should be noted that these specific values, which may represent cm or mm in accordance with certain embodiments, are example values only. In this regard, each of the specific values may be varied as desired. By way of example only, each of the specific values (e.g., mm or cm) noted in the figures may comprise from about 5% to about 300% of noted value illustrated in the figures, such as at least about 5, 10, 20, 40, 50, 60, 80 and 90% of the noted value illustrated in the figures, and/or at most about any of the following: 300, 280, 260, 240, 220, 200, 180, 160, 150, 140, 120, and 110% of the noted value illustrated in the figures. For example, a listed value of 1.5 (whether in mm or cm) may be varied from 0.075 to 450.

These and other modifications and variations to the invention may be practiced by those of ordinary skill in the art without departing from the spirit and scope of the invention, which is more particularly set forth in the appended claims. In addition, it should be understood that aspects of the various embodiments may be interchanged in whole or in part. Furthermore, those of ordinary skill in the art will appreciate that the foregoing description is by way of example only, and it is not intended to limit the invention as further described in such appended claims. Therefore, the spirit and scope of the appended claims should not be limited to the exemplary description of the versions contained herein.

## Claims

1. An optical switch, comprising:
(i) a fastening portion configured to releasably attach directly or indirectly to a fuse casing;
(ii) a cable connecting portion including (a) a first fiber optic cable connection port, (b) a second fiber optic cable connection port, and (c) an optical through-channel extending from the first fiber optic cable connection port and the second fiber optic connection port; and
(iii) an actuator having (a) a blown fuse indicator-receiving portion proximate to the fastening portion and located to be directly or indirectly impacted by a blown fuse indicator component from a fuse, and (b) a top portion proximate to the cable connecting portion and comprising an optical blocking portion; wherein the actuator has a first position associated with a non-blown fuse and a second position associated with a blown fuse where the optical blocking portion is located within the optical through-channel of the cable connecting portion.

2. The switch of claim 1, wherein the fastening portion, the cable connecting portion, and the actuator are each individual components that are releasably interconnected to each other to define the optical switch.

3. The switch of claim 2, wherein the fastening portion is attach directly or indirectly to the fuse casing via at least one connection means.

4. The switch of claim 3, wherein the at least one connection means includes a pair of male hooks configured to directly or indirectly releasably engage the fuse housing, one or more straps configured to directly or indirectly releasably engage the fuse housing, one or more inserts configured to directly or indirectly releasably engage the fuse housing, one or more magnets configured to directly or indirectly releasably engage the fuse housing, or any combination thereof.

5. The switch of claim 2, wherein the fastening portion includes at least one male engagement clip portion configured to releasably couple with a corresponding at least one female engagement clip portion to interlock and/or release the fastening portion to the cable connecting portion.

6. The switch of claim 2, wherein the fastening portion includes a hollow cavity extending through a thickness of the fastening portion, wherein the hollow cavity has a cross-section configured to receive and encircle the actuator therein.

7. The switch of claim 6, wherein the fastening portion further comprises at least one pair of lower guide channels configured to receive corresponding guide posts of the actuator, wherein the guide posts of the actuator rest in lowermost portion of the at least one pair of lower guide channels when the actuator is in the first position associated with a non-blown fuse.

8. The switch of claim 6, wherein the fastening portion further comprises at least one alignment protrusion configured to insert within at least one corresponding alignment recession of the cable connecting portion.

9. The switch of claim 7, wherein the cable connecting portion includes (i) a hollow pocket aligned with the hollow cavity of the fastening portion, and configured to receive and at least partially encase the top portion of the actuator, and (ii) at least one pair of upper guide channels aligned with the at least one pair of lower guide channels, and configured to receive the corresponding guide posts of the actuator when the actuator is located in the second position associated with a blown fuse.

10. The switch of claim 9, wherein the cable connecting portion includes at least one female engagement clip portion configured to releasably receive a corresponding at least one male engagement clip portion of the fastening portion, and wherein the at least one female engagement clip portion comprises a position-retention component having a first state associated with the first position associated with a non-blown fuse and a second state associated with a blown fuse.

11. The switch of claim 10, wherein the position-retention component is configured to retain the actuator in the first position of the actuator associated with a non-blown fuse until the actuator is translated to the second position of the actuator associated with a blown fuse.

12. The switch of claim 11, wherein the position-retention component engages a corresponding engagement-portion of the actuator.

13. The switch of claim 12, wherein the engagement-portion of the actuator comprises a recess formed in the actuator or a protrusion extending outwardly from the actuator, and wherein the position-retention component is biased towards a first state associated with the first position of the actuator, and is movable to a second state associated with the second position of the actuator, wherein a biasing force associated with the first state of the position-retention component is less than a force associated with a triggering force of a blown fuse indicator component from a fuse

14. The switch of claim 13, wherein the engagement-portion of the actuator comprises a protrusion extending outwardly from the actuator and through a portion of a side channel of the cable connecting portion, wherein the side channel is contiguous with the at least one female engagement clip portion of the cable connecting portion.

15. The switch of claim 14, wherein the side channel extends along a side wall of the cable connecting portion and is configured to allow translation of the protrusion extending outwardly from the actuator from the first position of the actuator associated with a non-blown fuse to the second position of the actuator associated with a blown fuse.

16. A system, comprising:
(i) an optical switch according to claim 1;
(ii) an optical transceiver module including a transmitter and a receiver;
(iii) a first fiber optic cable comprising a first proximate end connected to the first fiber optic cable connection port and a first distal end operatively coupled to the transmitter;
(iv) a second fiber optic cable comprising a second proximate end connected to the second fiber optic cable connection port and a second distal end operatively coupled to the receiver,
wherein the system defines a continuous optical loop when the actuator is in the first position associated with a non-blown fuse.

17. The system of claim 16, further comprising an external power source operatively connected to the optical transceiver module.

18. The system of claim 16, further comprising a fuse including a fuse casing having an indicator opening and a blown fuse indicator component having a first position associated with a non-blown fuse and a second position associated with a blown fuse, wherein the blown fuse indicator component protrudes through and outwardly from the indicator opening of the fuse casing.

19. The system of claim 18, wherein the fastening portion is attached directly or indirectly to the fuse casing, and the blown fuse indicator-receiving portion is located relative to the blown fuse indicator component such that the actuator is moved from the first position of the actuator to the second position of the actuator upon the blown fuse indicator component moving to the second position of the blown fuse indicator component.

20. The system of claim 19, wherein the optical blocking portion is located within the optical through-channel of the cable connecting portion and disrupts the continuous optical loop, the system further comprising an alarm means configured to indicate that the fuse has blown.
